# EUROPEAN PATENT SPECIFICATION

(11) **EP 3 363 704 B1**
(45) Date of publication and mention of the grant of the patent: **30.09.2020**
(21) Application number: 18157156.3
(22) Date of filing: 16.02.2018
(51) Int. Cl.: B60T 8/36, B60T 8/32, B60T 8/17, B60T 13/68

(54) **BASE SET OF BRAKE FLUID PRESSURE CONTROL DEVICE FOR VEHICLE AND METHOD OF MANUFACTURING BASE SET**
TRÄGERPLATTENSATZ EINER BREMSFLÜSSIGKEITSDRUCKREGELUNGSVORRICHTUNG FÜR FAHRZEUG UND VERFAHREN ZUR HERSTELLUNG EINES TRÄGERPLATTENSATZES
ENSEMBLE DE BASE DE DISPOSITIF DE COMMANDE DE PRESSION DE LIQUIDE DE FREIN POUR VÉHICULE ET PROCÉDÉ DE FABRICATION D'UN ENSEMBLE DE BASE

(30) Priority: 17.02.2017 JP 2017028505
(43) Date of publication of application: 22.08.2018
(73) Proprietor: NISSIN KOGYO CO., LTD., Nagano, 389-0514 (JP)
(72) Inventor: Chiba, Kentaro, Nagano, 389-0514 (JP); Kodama, Takuro, Nagano, 389-0514 (JP)
(74) Representative: Hoffmann Eitle

(56) References cited:
- WO-A1-2014/077353
- WO-A1-2015/174209
- WO-A1-2016/203333
- DE-A1-102010 062 270

## Description

### TECHNICAL FIELD

The present invention relates to a base set for brake fluid pressure control devices for vehicles, and a method of manufacturing a set of two bases for brake fluid pressure control devices for vehicles.

### BACKGROUND ART

For example, as a brake fluid pressure control device which is mounted on a vehicle with a bar handle and which is capable of performing brake control on front and rear wheels, there is a technology disclosed in Japanese Patent No. 5724941. In a brake fluid pressure control device disclosed in Japanese Patent No. 5724941, brake fluid passages corresponding to two systems, and mounting holes for assembling components, such as electromagnetic valves, corresponding to two systems are formed in a base.

Also, for example, there is a technology disclosed in JP-A-2016-97895.

In a brake fluid pressure control device disclosed in JP-A-2016-97895, in one base, brake fluid passages corresponding to one system, and mounting holes for assembling components corresponding to one system are formed.

In the technologies disclosed in Japanese Patent No. 5724941 and JP-A-2016-97895, since the base of the brake fluid pressure control device capable of performing brake control on two systems and the base of the brake fluid pressure control device capable of performing brake control on one system are different from each other in the positions of the brake fluid passages and the assembling-component mounting holes, it is required to separately install a manufacturing line for the base for two systems and a manufacturing line for the base for one system, and thus there is a problem that the cost of equipment is increased.

However, it is demanded to reduce the cost of equipment and the manufacturing cost, and it is desired to make the manufacturing lines common in the case of manufacturing the base of the brake fluid pressure control device capable of performing brake control on two systems and the base of the brake fluid pressure control device capable of performing brake control on one system.

WO-A1-2015/174209 discloses an ABS hydraulic unit comprising a block in which a pump and a valve are incorporated and in which a pipeline through which brake fluid flows is formed.

### SUMMARY

An object of the present invention is to provide a technology for making manufacturing lines common in a case of manufacturing a base of a brake fluid pressure control device capable of performing brake control on two systems and a base of a brake fluid pressure control device capable of performing brake control on one system.

The invention provides a base set for brake fluid pressure control devices for vehicles as recited in claim 1, combining a first aspect and a second aspect.

The invention relating to third through eighth aspects is the base set as recited in dependent claims 2 through 7.

The invention relating to a ninth aspect is a method of manufacturing a set of two bases for brake fluid pressure control devices for vehicles as recited in claim 8.

The invention relating to a tenth aspect is the method recited in dependent claim 9.

According to the configuration of the first aspect of the invention, in the first base and the second base, since the second base includes the same configuration as that of the first base, the brake fluid passage and the assembling-component mounting hole for the first system can be formed at the same positions. Therefore, it is possible to make manufacturing lines (processing lines and assembling lines) related to the first system common, and thus it is possible to suppress the cost of equipment and the manufacturing cost.

According to the configuration of the second aspect of the invention, the first base is a substantially rectangular parallelepiped block having dimensions a1, b1, c1 in three directions which are orthogonal to each other, the second base is a substantially rectangular parallelepiped block having dimensions a2, b2, c2 in three directions which are orthogonal to each other, and the dimensions of the first base and of the second base in the respective directions are identical so that the relations a1 = a2, b1 = b2, and c1 = c2 are satisfied. Therefore, it is possible to make manufacturing lines (processing lines and assembling lines) related to the first system common, and thus it is possible to suppress the cost of equipment and the manufacturing cost.

According to the configuration of the third aspect of the invention, in the first base, since the motor mounting hole is formed such that the center is positioned on the reference line, it is possible to dispose the motor with good balance. In the second base, since the motor mounting hole is formed on the other side of the reference line, it is possible to effectively use empty space to dispose the motor, leading to reduce in size of the brake fluid pressure control device for a vehicle.

According to the configuration of the fourth aspect of the invention, since the distance between the pair of assembling-component mounting holes (for example, the electromagnetic-valve mounting holes) is common, it is possible to make assembling lines common, and thus it is possible to reduce the cost of equipment.

According to the configuration of the fifth aspect of the invention, it is possible to simplify the configurations of the brake fluid passages while it is possible to dispose the brake fluid passages and the assembling-component mounting holes for the first system and the second system with good balance, leading to reduce in size of the brake fluid pressure control device for a vehicle. Especially, if this configuration is combined with claim 4, it is possible to make components (assembling components) common.

According to the configuration of the sixth aspect of the invention, it is possible to make electromagnetic valves, pumps, and reservoirs related to at least the first system common in the first base and the second base.

According to the configuration of the seventh aspect of the invention, it is possible to make assembling components common in the first system and the second system.

According to the configuration of the eighth aspect of the invention, since the motor mounting hole of the second base is formed together with the electromagnetic-valve mounting hole on the same face, it is possible to more efficiently use empty space, leading to further reduce in size of the brake fluid pressure control device for a vehicle. Further, it is possible to store the electromagnetic valve and the motor inside a housing, and the need for waterproofing of the single motor is eliminated, and thus it is possible to suppress the production cost.

According to the configuration of the ninth aspect of the invention, it is possible to make manufacturing lines related to the first system common in the first base and the second base, and thus it is possible to manufacture bases for brake fluid pressure control devices for vehicles for only one system and for two systems while suppressing the cost of equipment and the manufacturing cost.

According to the configuration of the tenth aspect of the invention, it is possible to efficiently use empty space of the second base, leading to reduce in size of the brake fluid pressure control device for a vehicle.

### BRIEF DESCRIPTION OF THE DRAWINGS

FIG. 1 is a base configuration diagram of a brake fluid pressure control device for a vehicle capable of handling two systems according to the present invention.
FIGs. 2A to 2E are views for explaining a shape of a first base which is a main element of the brake fluid pressure control device for a vehicle capable of handling two systems.
FIGs. 3A to 3C are views for explaining a method of manufacturing the first base.
FIGs. 4A to 4C are views for explaining the method of manufacturing the first base.
FIG. 5 is a base configuration diagram of a brake fluid pressure control device for a vehicle capable of handling one system according to the present invention.
FIGs. 6A to 6E are views for explaining a shape of a second base which is a main element of the brake fluid pressure control device for a vehicle capable of handling one system.
FIGs. 7A to 7C are views for explaining a method of manufacturing the second base.
FIGs. 8A to 8C are views for explaining the method of manufacturing the second base.
FIGs. 9A to 9D are perspective views for explaining a set.

### DETAILED DESCRIPTION

Embodiments of the present invention will be described below on the basis of the accompanying drawings. By the way, the drawings should be viewed in the direction of reference symbols.

Also, a control device for controlling the fluid pressures of a front-wheel brake and a rear-wheel brake will be referred to as a brake fluid pressure control device for a vehicle capable of handling two systems, and a control device for controlling the fluid pressure of one of a front-wheel brake and a rear-wheel brake will be referred to as a brake fluid pressure control device for a vehicle capable of handling one system.

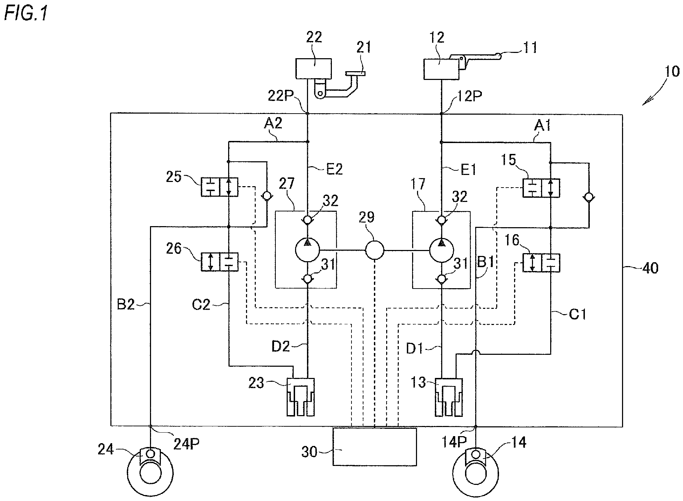

As shown in FIG. 1, a brake fluid pressure control device 10 for a vehicle capable of handling two systems includes: a first master cylinder 12 which pressurizes a hydraulic fluid in response to an operation on a brake lever, thereby producing a fluid pressure; a first reservoir 13 which temporarily stores the hydraulic fluid released from a front-wheel brake caliper 14; a first inlet control valve 15 and a first outlet control valve 16 which are assembling components that are installed between the first master cylinder 12 and the front-wheel brake caliper 14, the first inlet control valve 15 which is a normally open type electromagnetic valve, the first outlet control valve 16 which is a normally closed type electromagnetic valve; a first pump 17 which is an assembling component that is sucks the hydraulic fluid stored in the first reservoir 13 and returns the hydraulic fluid toward the first master cylinder 12; a second master cylinder 22 which pressurizes the hydraulic fluid in response to an operation on a brake pedal 21, thereby producing a fluid pressure; a second reservoir 23 which temporarily stores the hydraulic fluid released from a rear-wheel brake caliper 24; a second inlet control valve 25 and a second outlet control valve 26 which are assembling components installed between the second master cylinder 22 and the rear-wheel brake caliper 24, the second inlet control valve 25 which is a normally open type electromagnetic valve, the second outlet control valve 26 which is a normally closed type electromagnetic valve; a second pump 27 which is an assembling component that sucks the hydraulic fluid stored in the second reservoir 23 and returns the hydraulic fluid toward the second master cylinder 22; a motor 29 which drives the first and second pumps 17 and 27; a control device 30 which performs driving control on the motor 29 and opening and closing control on the first and second inlet control valves 15 and 25 and the first and second outlet control valves 16 and 26; and brake fluid passages A1, B1, C1, D1, and E1 of a first system and brake fluid passages A2, B2, C2, D2, and E2 of a second system which are provided in a first base 40 and flow a brake fluid.

Here, the brake fluid passage A1 is a fluid passage extending from an inlet port 12P to the first inlet control valve 15, and the brake fluid passage B1 is a fluid pressure extending from the first inlet control valve 15 to an outlet port 14P. Also, the brake fluid passage C1 is a fluid passage extending from the brake fluid passage B1 to the first reservoir 13, and the brake fluid passage D1 is a fluid passage extending from the first reservoir 13 to the first pump 17. Further, the brake fluid passage E1 is a fluid passage extending from the first pump 17 to the brake fluid passage A1. With respect to the brake fluid passages A2, B2, C2, D2, and E2, since a description will be a duplicate, a description will not be made.

Suction valves 31 are installed on the suction sides of the first and second pumps 17 and 27, respectively, and discharge valves 32 are installed on the discharge sides of the first and second pumps 17 and 27, respectively.

Also, the base 40 includes the inlet port 12P to which a fluid passage (a brake pipe) extending from the first master cylinder 12 is connected, an inlet port 22P to which a fluid passage (a brake pipe) extending from the second master cylinder 22 is connected, the outlet port 14P to which a fluid passage (a brake pipe) extending to the front-wheel brake caliper 14 is connected, and an outlet port 24P to which a fluid passage (a brake pipe) extending to the rear-wheel brake caliper 24 is connected.

Now, the operation of the brake fluid pressure control device 10 for a vehicle will be described. However, since the first system from the brake pedal 21 to the front-wheel brake caliper 14 and the second system from the brake pedal 21 to the rear-wheel brake caliper 24 are the same in the operation, only the first system will be described.

### • State where ABS is not operated

When it is not required to lock a front wheel, the control device 30 stops the first pump 17, and opens the first inlet control valve 15, and closes the first outlet control valve 16. In this state, if the brake lever 11 is operated to the braking side, the fluid pressure is increased by the first master cylinder 12, and this fluid pressure is transmitted to the front-wheel brake caliper 14 via the first inlet control valve 15.

### • ABS (Depressurization Mode)

If it is nearly required to lock the front wheel, the control device 30 closes the first inlet control valve 15, and opens the first outlet control valve 16. The fluid pressure in the front-wheel brake caliper 14 is released to the first reservoir 13 via the first outlet control valve 16. By this, the brake fluid pressure of the front-wheel brake caliper 14 is decreased.

### • ABS (Hold Mode)

The control device 30 closes both of the first inlet control valve 15 and the first outlet control valve 16. By this, the brake fluid pressure of the front-wheel brake caliper 14 is held constantly.

### • ABS (Pressurization Mode)

When increasing the brake fluid pressure, the control device 30 opens the first inlet control valve 15, and closes the first outlet control valve 16. By this, the fluid pressure produced by the master cylinder 12 is transmitted to the front-wheel brake caliper 14. By this, the brake fluid pressure of the front-wheel brake caliper 14 is increased.

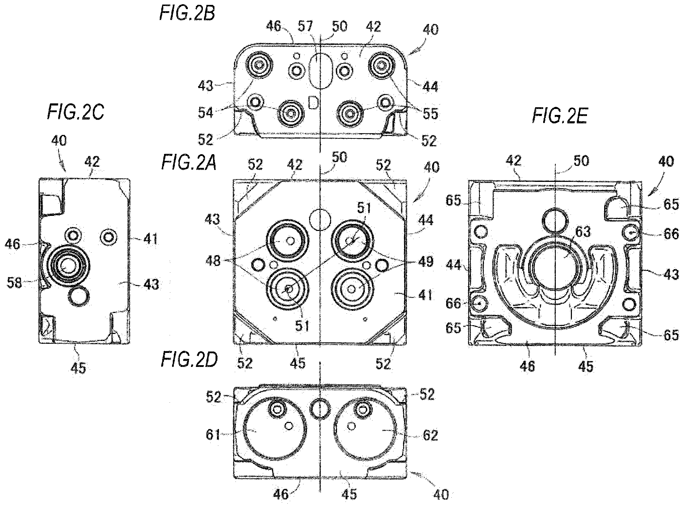

The configuration of a first base 40 which is a main component of the brake fluid pressure control device 10 for a vehicle capable of handling two systems will be described on the basis of FIGs. 2A to 2E.

FIG. 2A is a front view of the first base 40, FIG. 2B is a plan view of the first base 40, FIG. 2C is a side view of the first base 40, FIG. 2D is a bottom view of the first base 40, and FIG. 2E is a rear view of the first base 40.

As shown in FIGs. 2A to 2E, the first base 40 is a substantially rectangular parallelepiped block, and is a hexahedron having a first face 41, a second face 42, a third face 43, a fourth face 44, a fifth face 45, and a sixth face 46. The first face 41 and the sixth face 46 are parallel to each other (the case where they are substantially parallel to each other is included, and the same is true in the following description), and the second face 42 and the fifth face 45 are parallel to each other, and the third face 43 and the fourth face 44 are parallel to each other.

As shown in FIG. 2A, in the first face 41, electromagnetic-valve mounting holes 48 and 48 in which assembling components composed of the first inlet control valve 15 and the first outlet control valve 16 described with FIG. 1 are to be mounted are formed, and electromagnetic-valve mounting holes 49 and 49 in which assembling components composed of the second inlet control valve 25 and the second outlet control valve 26 are to be mounted are formed. The electromagnetic-valve mounting holes 48 and the electromagnetic-valve mounting holes 49 are disposed at positions symmetrical with respect to a reference line 50 passing through the center of the first face 41.

On a diagonal, first processing references 51 and 51 are set.

Further, at four corners of the first face 41, clamp parts 52 are provided.

As shown in FIG. 2B, in the second face 42, which is one face, brake pipe mounting holes 54 and 54 corresponding to the inlet port 12P and the outlet port 14P described with FIG. 1 are formed, and brake pipe mounting holes 55 and 55 corresponding to the inlet port 22P and the outlet port 24P are formed.

On one side of the reference line 50 passing through the center of the second face 42 which is the one face, the brake pipe mounting holes 54 and 54 for the first system are disposed, and on the other side of the reference line 50, the brake pipe mounting holes 55 and 55 for the second system are disposed.

In the second face 42, a recess 57 is formed on the reference line 50.

As shown in FIG. 2C, in the third face 43, a pump mounting hole 58 in which an assembling component composed of a pump (the reference symbol "17" in FIG. 1) is to be mounted is formed. Also, although the right side view has been omitted, in the fourth face 44, a pump mounting hole in which an assembling component composed of a pump (the reference symbol "27" in FIG. 1) is to be mounted is formed.

As shown in FIG. 2D, in the fifth face 45, a reservoir mounting hole 61 in which an assembling component composed of the reservoir 13 described with FIG. 1 is to be mounted, and a reservoir mounting hole 62 in which an assembling component composed of the reservoir 23 is to be mounted are formed so as to be symmetrical with respect to the reference line 50.

As shown in FIG. 2E, in the sixth face 46, a motor mounting hole 63 in which the motor 29 described with FIG. 1 is to be mounted is formed. In the first base 40, the center of the motor mounting hole 63 is positioned on the reference line 50.

In the sixth face 46, clamp parts 65 are provided at four corners. Further, in the sixth face 46, on a diagonal, second processing references 66 and 66 are provided.

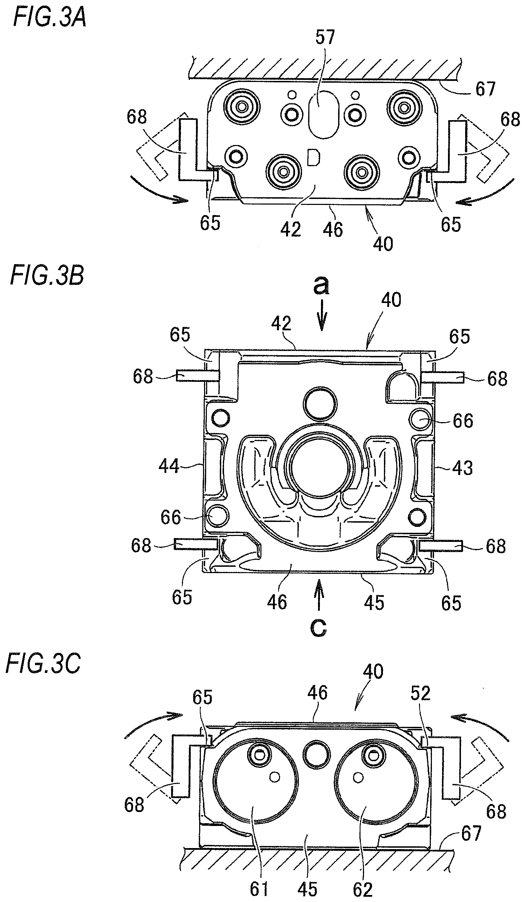

A processing method which is performed on the above-mentioned first base 40 will be described with reference to FIG. 3A to FIG. 4C.

On the basis of FIGs. 3A to 3C, formation of a recess 44B and machining on three faces which are performed on the first base 40 will be described.

FIG. 3B is a plan view, FIG. 3A is a view as seen in an arrow "a" of FIG. 3B, and FIG. 3C is a view as seen in an arrow "c" FIG. 3B.

As shown in FIG. 3C, the first base 40 is put on a surface plate 67 or the like. Then, clamp fittings 68 are fixed to the clamp parts 65, whereby the first base 40 is clamped. As shown in FIG. 3B, the first base 40 is clamped by the clamp fittings 68. With reference to the second processing references 66, three faces (the second face 42, the fifth face 45, and the sixth face 46 of the first base 40) where the clamp fittings 68 and a cutting tool do not interfere with each other are machined. At this time, in FIG. 3A, the recess 57 is formed.

When processing for the second face 42, the fifth face 45, the sixth face 46, and the recess 57 is ended, the clamp fittings 68 are loosened or removed, and the first base 40 is horizontally rotated 90 degrees, and is turned upside down.

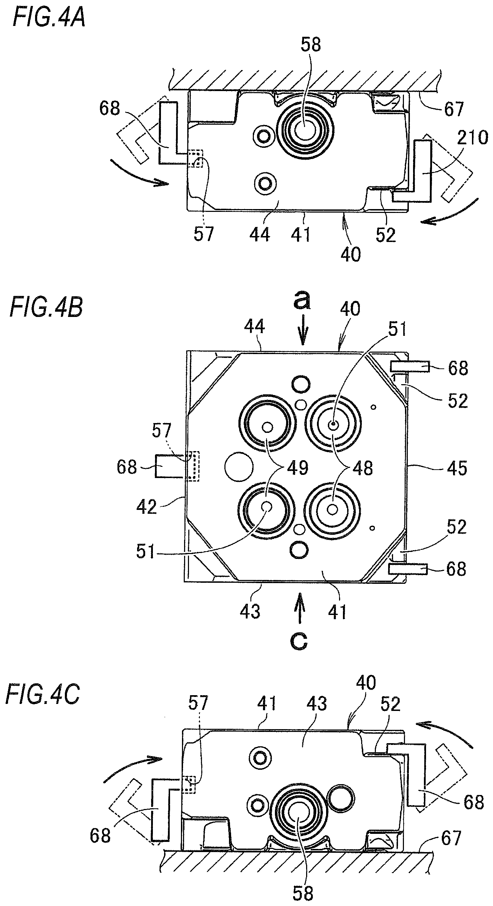

As shown in FIG. 4B, the position of the recess 57 has been changed. In FIG. 4C, the first base 40 is clamped with the clamp fittings 68, and at this time, the clamp parts 52 and 52 and the recess 57 are clamped. The swingable type clamp fittings 68 are moved in the vertical direction for clamping. Since the recess 57 has a room in the height direction, it is possible to use the swingable type clamp fittings 68.

After clamping, the other three faces (the first face 41, the third face 43, and the fourth face 44 of the first base 40) where the clamp fittings 68 and the cutting tool do not interfere with each other are machined.

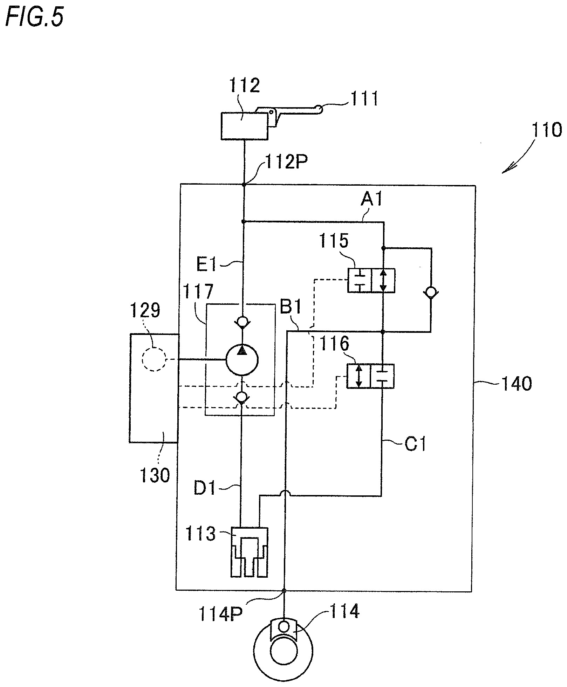

Now, the configuration of a second base 140 which is a main component of a brake fluid pressure control device 110 for a vehicle capable of handling one system will be described on the basis of FIG. 5.

As shown in FIG. 5, the brake fluid pressure control device 110 for a vehicle includes: a master cylinder 112 which pressurizes a hydraulic fluid in response to an operation on a brake lever 111, thereby producing a fluid pressure; a reservoir 113 which temporarily stores the hydraulic fluid released from a front-wheel brake caliper 114; an inlet control valve 115 and an outlet control valve 116 which are installed between the master cylinder 112 and the front-wheel brake caliper 114, the inlet control valve 115 which is a normally open type electromagnetic valve, the outlet control valve 116 which is a normally closed type electromagnetic valve; a pump 117 which sucks the hydraulic fluid stored in the reservoir 113 and returns the hydraulic fluid toward the master cylinder 112; a motor 129 which drives the pump 117; a control device 130 which performs driving control on the motor 129 and opening and closing control on the inlet control valve 115 and the outlet control valve 116; and brake fluid passages A1, B1, C1, D1, and E1 which are formed in a second base 140 and flow a brake fluid.

Here, the brake fluid passage A1 is a fluid passage extending from an inlet port 112P to the inlet control valve 115, and the brake fluid passage B1 is a fluid pressure extending from the inlet control valve 115 to an outlet port 114P. Also, the brake fluid passage C1 is a fluid passage extending from the brake fluid passage B1 to the reservoir 113, and the brake fluid passage D1 is a fluid passage extending from the reservoir 113 to the pump 117. Further, the brake fluid passage E1 is a fluid passage extending from the pump 117 to the brake fluid passage A1.

Now, the operation of the brake fluid pressure control device 110 for a vehicle will be described.

### • State where ABS is not operated

When it is not required to lock a front wheel, the control device 130 stops the pump 117, and opens the inlet control valve 115, and closes the outlet control valve 116. In this state, if the brake lever 111 is operated to the braking side, the fluid pressure is increased by the master cylinder 112, and this fluid pressure is transmitted to the front-wheel brake caliper 114 via the inlet control valve 115.

### • ABS (Depressurization Mode)

If it is nearly required to lock the front wheels, the control device 130 closes the inlet control valve 115, and opens the outlet control valve 116. The fluid pressure in the front-wheel brake caliper 114 is released to the reservoir 113 via the outlet control valve 116. By this, the brake fluid pressure of the front-wheel brake caliper 114 is decreased.

### • ABS (Hold Mode)

The control device 130 closes both of the inlet control valve 115 and the outlet control valve 116. By this, the brake fluid pressure of the front-wheel brake caliper 114 is held constantly.

### • ABS (Pressurization Mode)

When increasing the brake fluid pressure, the control device 130 opens the inlet control valve 115, and closes the outlet control valve 116. By this, the fluid pressure produced by the master cylinder 112 is transmitted to the front-wheel brake caliper 114. By this, the brake fluid pressure of the front-wheel brake caliper 114 is increased.

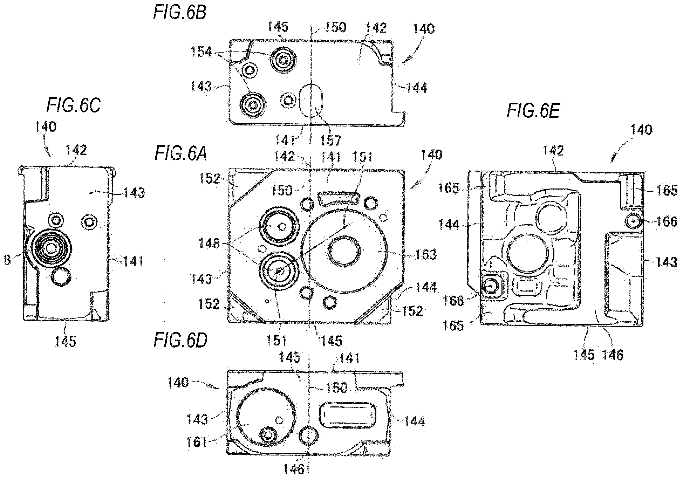

FIG. 6A is a front view of the second base 140, FIG. 6B is a plan view of the second base 140, FIG. 6C is a side view of the second base 140, FIG. 6D is a bottom view of the second base 140, and FIG. 6E is a rear view of the second base 140.

As shown in FIGs. 6A to 6E, the second base 140 is a substantially rectangular parallelepiped block, and is a hexahedron having a first face 141, a second face 142, a third face 143, a fourth face 144, a fifth face 145, and a sixth face 146. The first face 141 and the sixth face 146 are parallel to each other (the case where they are substantially parallel to each other is included, and the same is true in the following description), and the second face 142 and the fifth face 145 are parallel to each other, and the third face 143 and the fourth face 144 are parallel to each other.

As shown in FIG. 6A, in the first face 141, electromagnetic-valve mounting holes 148 and 148 in which assembling components composed of the inlet control valve 115 and the outlet control valve 116 described with FIG. 5 are to be mounted are formed. The electromagnetic-valve mounting holes 148 and 148 are disposed on one side with respect to a reference line 150 passing through the center of the second base 140. In the first face 141, a motor mounting hole 163 in which the motor 129 described with FIG. 5 is to be mounted is formed.

In the second base 140, the motor mounting hole 163 and the electromagnetic-valve mounting holes 148 and 148 are formed on the same face, whereby it is possible to more efficiently use empty space, leading to further reduce in size of the brake fluid pressure control device 110 for a vehicle. Further, it is possible to store the electromagnetic valves 115 and 116 and the motor 129 in the same housing, and the need for waterproofing of the single motor 129 is eliminated, and thus it is possible to suppress the production cost.

On a diagonal, first processing references 151 and 151 are set.

Further, at three of four corners of the first face 141, clamp parts 152 are provided.

As shown in FIG. 6B, in the second face 142, which is one face, brake pipe mounting holes 154 and 154 corresponding to the inlet port 112P and the outlet port 114P described with FIG. 5 are formed.

On one side of the reference line 150 passing through the center of the second face 142 which is the one face, the brake pipe mounting holes 154 and 154 for the first system are disposed. In the second face 142, a recess 157 is formed on the reference line 150.

As shown in FIG. 6C, in the third face 143, a pump mounting hole 158 in which an assembling component composed of a pump (the reference symbol "117" in FIG. 5) is to be mounted is formed.

As shown in FIG. 6D, in the fifth face 145, a reservoir mounting hole 161 in which an assembling component composed of the reservoir 113 described with FIG. 5 is to be mounted is disposed on one side of the reference line 150.

As shown in FIG. 6E, in the sixth face 146, clamp parts 165 are provided at three corners. Further, in the sixth face 146, on a diagonal, second processing references 166 and 166 are provided.

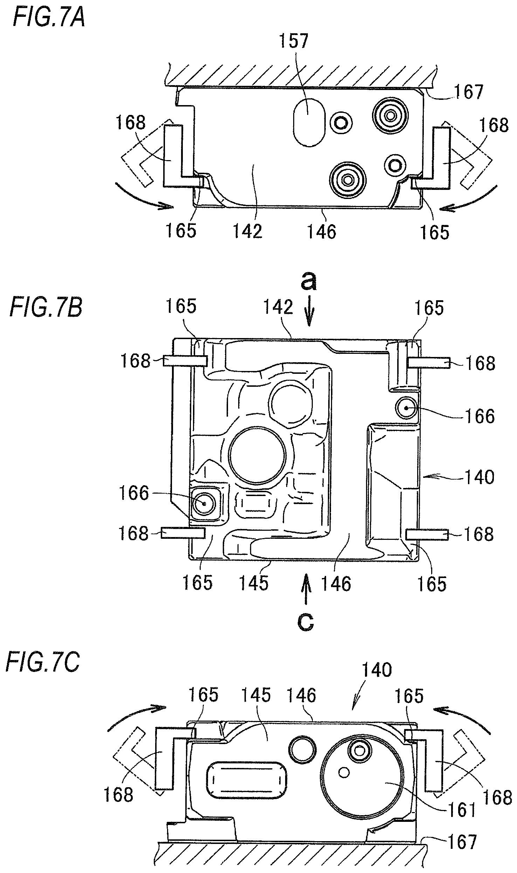

A processing method which is performed on the above-mentioned second base 140 will be described on the basis of FIG. 7A to FIG. 8C.

FIG. 7B is a plan view, FIG. 7A is a view as seen in an arrow "a" of FIG. 7B, and FIG. 7C is a view as seen in an arrow "c" of FIG. 7B.

As shown in FIG. 7C, the first base 140 is put on a surface plate 167 or the like. Then, clamp fittings 168 are fixed to the clamp parts 165, whereby the second base 140 is clamped. As shown in FIG. 7B, the second base 140 is clamped by the clamp fittings 168. With reference to the second processing references 166, three faces (the second face 142, the fifth face 145, and the sixth face 146 of the second base 140) where the clamp fittings 168 and a cutting tool do not interfere with each other are machined. At this time, in FIG. 7A, the recess 157 is formed.

When processing for the second face 142, the fifth face 145, the sixth face 146, and the recess 157 is ended, the clamp fittings 168 are loosened or removed, and the second base 140 is horizontally rotated 90 degrees, and is turned upside down.

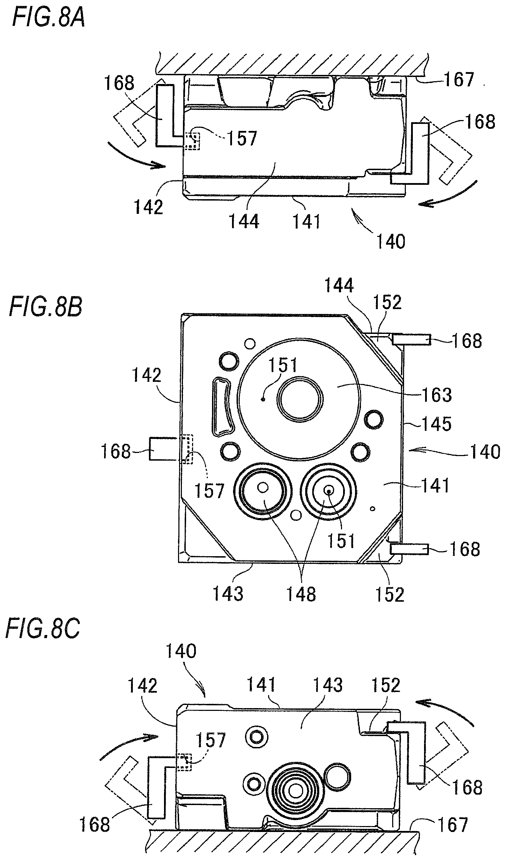

As shown in FIG. 8B, the position of the recess 157 has been changed. In FIG. 8C, the second base 140 is clamped with the clamp fittings 168, and at this time, the clamp parts 152 and the recess 157 are clamped. The swingable type clamp fittings 168 are moved in the vertical direction for clamping. Since the recess 157 has a room in the height direction, it is possible to use the swingable type clamp fittings 168.

After clamping, the other three faces (the first face 141, the third face 143, and the fourth face 144 of the second base 140) where the clamp fittings 168 and the cutting tool do not interfere with each other are machined.

Both of the first base 40 and the second base 140 described above are substantially rectangular parallelepiped blocks, and the blocks have almost the same longitudinal dimensions. Further, the brake fluid passages and the assembling-component mounting holes for the first system which are formed in the first base 40 are disposed at the same positions as those of the second base 140. As a result, it is possible to make machining common, and thus it is possible to reduce man-hours for processing and the processing cost.

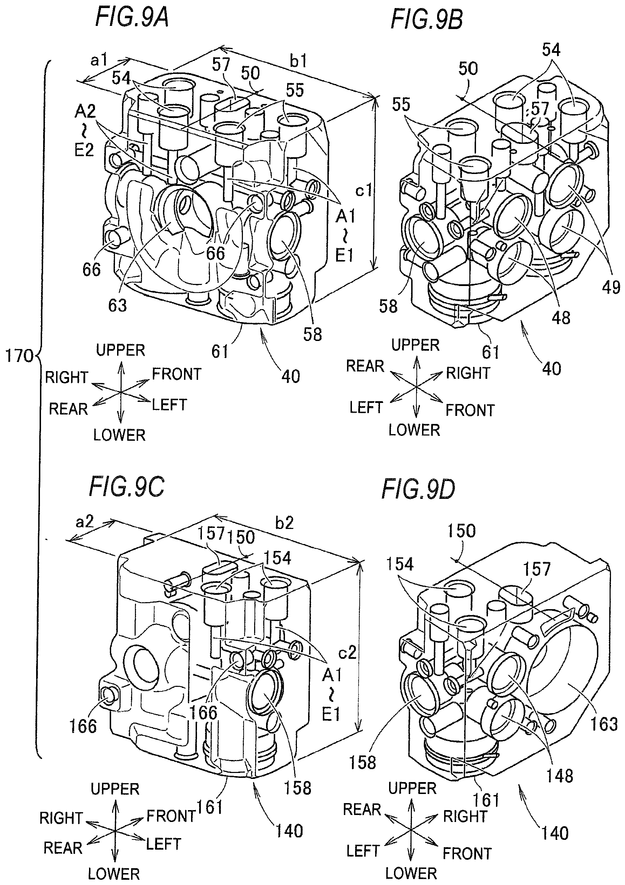

FIGs. 9A and 9B show perspective views of the first base 40, and FIGs. 9C and 9D show perspective views of the second base 140.

The combination of the first base 40 and the second base 140 will be referred to as a set 170 of the first base 40 and the second base 140.

The longitudinal dimensions a1, b1, and c1 of the first base 40 shown in FIG. 9A and the longitudinal dimensions a2, b2, and c2 of the second base 140 shown in FIG. 9C are the same as each other and satisfy a1 = a2, b1 = b2, and c1 = c2.

Further, as shown in FIG. 9A, in the first base 40, on one side of the reference line 50 passing through the center position (here, the center of a transverse dimension b1), the brake fluid passages A1 to E1 for the first system are formed, and on the other side of the reference line 50, the brake fluid passages A2 to E2 for the second system are formed.

Also, as shown in FIG. 9C, in the second base 140, on one side of the reference line 150, the brake fluid passages A1 to E1 for the first system are formed.

In the first base 40 and the second base 140, the brake fluid passages A1 to E1 for the first system are formed at the same positions.

In the first base 40 and the second base 140, the electromagnetic-valve mounting holes 48 and 148 in which the electromagnetic valves are to be mounted, the pump mounting holes 58 and 158 in which the pumps are to be mounted and stored, the reservoir mounting holes 61 and 161 in which the reservoirs are to be stored, and so on are formed at the same positions in the first base 40 and the second base 140.

As described above, in the first base 40 and the second base 140, the first brake fluid passages A1 to E1 and the assembling-component mounting holes are formed at the same positions. Therefore, it is possible to make manufacturing lines (such as a processing line and an assembling line) related to the first system common, and thus it is possible to suppress the cost of equipment and the manufacturing cost.

In FIG. 9A, the first base 40 is formed such that the center of the motor mounting hole 63 in which the motor 29 is to be mounted is positioned on the reference line 50. Further, as shown in FIG. 9D, in the second base 140, on the other side of the reference line 150, the motor mounting hole 163 is formed.

By doing this, in the second base 140, on the other side of the reference line 150, the motor mounting hole 163 is formed. Therefore, it becomes possible to use more efficiently empty space to dispose the motor 129, leading to reduce in size of the brake fluid pressure control device 110 for a vehicle.

Also, as shown in FIG. 9D, in the second base 140, the motor mounting hole 163 and the electromagnetic-valve mounting holes 148 are formed in the same face. Since the motor mounting hole 163 and the electromagnetic-valve mounting holes 148 are formed in the same face, it is possible to more efficiently use empty space, leading to further reduce in size of the brake fluid pressure control device 110 for a vehicle. Also, it is possible to store the motor together with the electromagnetic valves inside the housing, and the need for waterproofing of the single motor is eliminated, and thus it is possible to suppress the production cost.

Since the assembling components are electromagnetic valves, pumps, and reservoirs, it is possible to make electromagnetic valves, pumps, and reservoirs related to at least the first system common.

As shown in FIGs. 9A and 9B, in the first base 40, the brake fluid passages A1 to E1 and the assembling-component mounting holes for the first system are formed so as to be symmetrical with respect to the reference line 50. Therefore, while it is possible to dispose the brake fluid passages A1 to E1 and A2 to E2 and the assembling-component mounting holes for the first system and the second system with good balance, it is possible to simplify the configuration of the brake fluid passages A1 to E1 and A2 to E2, leading to further reduce in size of the brake fluid pressure control device 10 for a vehicle.

The present invention is suitable for a brake fluid pressure control device for a vehicle.

## Claims

1. A base set (170) for brake fluid pressure control devices (10, 110) for vehicles, the base set (170) including a substantially rectangular parallelepiped first base (40) in which a brake fluid passage (A1-E1) for a first system and a brake fluid passage (A2-E2) for a second system are formed, and a substantially rectangular parallelepiped second base (140) in which only a brake fluid passage (A1-E1) for the first system but no brake fluid passage for the second system is formed, wherein
the first base (40) is a substantially rectangular parallelepiped block having dimensions a1, b1 and c1 in three directions which are orthogonal to each other, the second base (140) is a substantially rectangular parallelepiped block having dimensions a2, b2 and c2 in three directions which are orthogonal to each other,
in the first base (40), in one face, assembling-component mounting holes in which assembling components are to be mounted are formed,
in the first base (40), on one side of a reference line (50) passing through a center of the one face, the brake fluid passage (A1-E1) and an assembling-component mounting hole (48) for the first system are formed, and on the other side of the reference line (50), the brake fluid passage (A2-E2) and an assembling-component mounting hole (49) for the second system are formed, and
in the second base (140), the brake fluid passage (A1-E1) and an assembling-component mounting hole (148) for the first system having the same configuration as those of the first base (40) are formed,
**characterised in that**
the dimensions of the first base (40) and of the second base (140) in the respective directions are identical so that the relations a1 = a2, b1 = b2 and c1 = c2 are satisfied.

2. The base set (170) according to claim 1, wherein
in the first base (40), a motor mounting hole (63) in which a motor (29) is to be mounted is formed such that a center is positioned on the reference line (50), and
in the second base (140), on one side of a reference line (150) passing through a center of one face of the second base (140), the brake fluid passage (A1-E1) and the assembling-component mounting hole (148) for the first system are formed, and on the other side of the reference line (150), a motor mounting hole (163) in which a motor (129) is to be mounted is formed.

3. The base set (170) according to any one of claims 1 and 2, wherein in each of the first base (40) and the second base (140), in the one face, a pair of assembling-component mounting holes (48; 148) for the first system are formed, and a distance between centers of the pair of assembling-component mounting holes (48; 148) is common.

4. The base set (170) according to any one of claims 1 to 3, wherein in the first base (40), the brake fluid passage (A1-E1) and the assembling-component mounting hole (48) for the first system, and the brake fluid passage (A2-E2) and the assembling-component mounting hole (49) for the second system are formed so as to be symmetrical with respect to the reference line (50).

5. The base set (170) according to any one of claims 1 to 4, wherein the assembling component is an electromagnetic valve, a pump, or a reservoir.

6. The base set (170) according to claim 4 or 5, wherein the first system and the second system include the common assembling components.

7. The base set (170) according to claim 2, wherein in the second base (140), the motor mounting hole (163) and an electromagnetic-valve mounting hole (148) in which an electromagnetic valve is to be mounted are formed in the same face.

8. A method of manufacturing a set (170) of two bases for brake fluid pressure control devices (10, 110) for vehicles, which set (170) includes a substantially rectangular parallelepiped first base (40) in which a brake fluid passage (A1-E1) for a first system and a brake fluid passage (A2-E2) for a second system are formed, and a substantially rectangular parallelepiped second base (140) in which only a brake fluid passage (A1-E1) for the first system is formed, the method **characterised by** comprising:
providing the first base (40) as a substantially rectangular parallelepiped block having dimensions a1, b1 and c1 in three directions which are orthogonal to each other, and providing the second base (140) as a substantially rectangular parallelepiped block having dimensions a2, b2 and c2 in three directions which are orthogonal to each other, and the dimensions of the first base (40) and of the second base (140) in the respective directions are identical so that the relations a1 = a2, b1 = b2, and c1 = c2 are satisfied,
in each of the first base (40) and the second base (140), on one side of a reference line (50; 150) passing through a center position, forming the brake fluid passage (A1-E1) and an assembling-component mounting hole (48; 148) for the first system;
in the first base (40), on the other side of the reference line (50), forming the brake fluid passage (A2-E2) and an assembling-component mounting hole (49) for the second system, and forming a motor mounting hole (63) such that a center is positioned on the reference line (50); and
in the second base (140), on the other side of the reference line (150), forming a motor mounting hole (163).

9. The method according to claim 8, wherein in the second base (140), the motor mounting hole (163) and a mounting hole (148) in which an electromagnetic valve is to be mounted are formed in the same face.

## Patentansprüche

1. Trägerplattensatz (170) für Bremsflüssigkeitsdruckregelungsvorrichtungen (10, 110) für Fahrzeuge, wobei der Trägerplattensatz (170) eine im Wesentlichen rechteckige, parallelflache erste Trägerplatte (40), in welcher ein Bremsflüssigkeitskanal (A1-E1) für ein erstes System und ein Bremsflüssigkeitskanal (A2-E2) für ein zweites System gebildet werden, und eine im Wesentlichen rechteckige, parallelflache zweite Trägerplatte (140), in welcher nur ein Bremsflüssigkeitskanal (A1-E1) für das erste System, jedoch kein Bremsflüssigkeitskanal für das zweite System gebildet wird, beinhaltet, wobei
die erste Trägerplatte (40) ein im Wesentlichen rechteckiger, parallelflacher Block mit Abmessungen a1, b1 und c1 in drei Richtungen ist, welche senkrecht zueinander sind, die zweite Trägerplatte (140) ein im Wesentlichen rechteckiger, parallelflacher Block mit Abmessungen a2, b2 und c2 in drei Richtungen ist, welche senkrecht zueinander sind,
in der ersten Trägerplatte (40) in einer Fläche Zusammenbauteil-Montagelöcher gebildet sind, in welche Zusammenbauteile montiert werden sollen,
in der ersten Trägerplatte (40) auf einer Seite einer Bezugslinie (50), welche durch einen Mittelpunkt der einen Fläche verläuft, der Bremsflüssigkeitskanal (A1-E1) und ein Zusammenbauteil-Montageloch (48) für das erste System gebildet sind, und auf der anderen Seite der Bezugslinie (50) der Bremsflüssigkeitskanal (A2-E2) und ein Zusammenbauteil-Montageloch (49) für das zweite System gebildet sind; und
in der zweite Trägerplatte (140) der Bremsflüssigkeitskanal (A1-E1) und ein Zusammenbauteil-Montageloch (148) für das erste System mit derselben Konfiguration wie jene der ersten Trägerplatte (40) gebildet sind,
**dadurch gekennzeichnet, dass**
die Abmessungen der ersten Trägerplatte (40) und der zweiten Trägerplatte (140) in den entsprechenden Richtungen identisch sind, sodass die Beziehungen a1=a2, b1=b2 und c1=c2 erfüllt sind.

2. Trägerplattensatz (170) nach Anspruch 1, wobei
in der ersten Trägerplatte (40) ein Motor-Montageloch (63), in welches ein Motor (29) montiert werden soll, gebildet ist, sodass ein Mittelpunkt auf der Bezugslinie (50) positioniert wird, und
in der zweiten Trägerplatte (140) auf einer Seite einer Bezugslinie (150), welche durch einen Mittelpunkt einer Fläche der zweiten Trägerplatte (140) verläuft, der Bremsflüssigkeitskanal (A1-E1) und das Zusammenbauteil-Montageloch (148) für das erste System gebildet sind, und auf der anderen Seite der Bezugslinie (150) ein Motor-Montageloch (163), in welches ein Motor (129) montiert werden soll, gebildet ist.

3. Trägerplattensatz (170) nach einem der Ansprüche 1 und 2, wobei in jede von der ersten Trägerplatte (40) und der zweiten Trägerplatte (140) in der einen Fläche ein Paar von Zusammenbauteil-Montagelöchern (48; 148) für das erste System gebildet sind, und ein Abstand zwischen Mittelpunkten des Paares von Zusammenbauteil-Montagelöchern (48; 148) gemeinsam ist.

4. Trägerplattensatz (170) nach einem der Ansprüche 1 bis 3, wobei in der ersten Trägerplatte (40) der Bremsflüssigkeitskanal (A1-E1) und das Zusammenbauteil-Montageloch (48) für das erste System und der Bremsflüssigkeitskanal (A2-E2) und das Zusammenbauteil-Montageloch (49) für das zweite System gebildet sind, sodass sie in Bezug auf die Bezugslinie (50) symmetrisch sind.

5. Trägerplattensatz (170) nach einem der Ansprüche 1 bis 4, wobei der Zusammenbauteil ein elektromagnetisches Ventil, eine Pumpe oder ein Behälter ist.

6. Trägerplattensatz (170) nach Anspruch 4 oder 5, wobei das erste System und das zweite System die gemeinsamen Zusammenbauteile beinhalten.

7. Trägerplattensatz (170) nach Anspruch 2, wobei in der zweiten Trägerplatte (140) das Motor-Montageloch (163) und ein Montageloch für ein elektromagnetisches Ventil (148), in welches ein elektromagnetisches Ventil montiert werden soll, in derselben Fläche gebildet sind.

8. Verfahren zur Herstellung eines Satzes (170) von zwei Trägerplatten für Bremsflüssigkeitsdruckregelungsvorrichtungen (10, 110) für Fahrzeuge, wobei der Satz (170) eine im Wesentlichen rechteckige, parallelflache erste Trägerplatte (40), in welcher einen Bremsflüssigkeitskanal (A1-E1) für ein erstes System und ein Bremsflüssigkeitskanal (A2-E2) für ein zweites System gebildet sind, und eine im Wesentlichen rechteckige, parallelflache zweite Trägerplatte (140), in welcher nur ein Bremsflüssigkeitskanal (A1-E1) für das erste System gebildet ist, beinhaltet, wobei das Verfahren **dadurch gekennzeichnet ist, dass** es umfasst:
Bereitstellen der ersten Trägerplatte (40) als einen im Wesentlichen rechteckigen, parallelflachen Block mit Abmessungen a1, b1 und c1 in drei Richtungen, welche senkrecht zueinander sind, und Bereitstellen der zweiten Trägerplatte (140) als einen im Wesentlichen rechteckigen, parallelflachen Block mit Abmessungen a2, b2 und c2 in drei Richtungen, welche senkrecht zueinander sind, und wobei die Abmessungen der ersten Trägerplatte (40) und der zweiten Trägerplatte (140) in den entsprechenden Richtungen identisch sind, sodass die Beziehungen a1=a2, b1=b2 und c1=c2 erfüllt sind.
in jeder von der ersten Trägerplatte (40) und der zweiten Trägerplatte (140), auf einer Seite einer Bezugslinie (50; 150), welche durch eine Mittelposition verläuft, Bilden des Bremsflüssigkeitskanals (A1-E1) und eines Zusammenbauteil-Montagelochs (48; 148) für das erste System;
in der ersten Trägerplatte (40), auf der anderen Seite der Bezugslinie (50), Bilden des Bremsflüssigkeitskanals (A2-E2) und eines Zusammenbauteil-Montagelochs (49) für das zweite System, und Bilden eines Motor-Montagelochs (63), sodass ein Mittelpunkt auf der Bezugslinie (50) positioniert wird; und
in der zweiten Trägerplatte (140), auf der anderen Seite der Bezugslinie (150), Bilden eines Motor-Montagelochs (163).

9. Verfahren nach Anspruch 8, wobei in der zweiten Trägerplatte (140) das Motor-Montageloch (163) und ein Montageloch (148), in welches ein elektromagnetisches Ventil montiert werden soll, in derselben Fläche gebildet sind.

## Revendications

1. Ensemble (170) de base pour dispositifs de commande de pression de liquide de frein (10, 110) pour véhicules, l'ensemble (170) de base incluant une première base (40) parallélépipédique sensiblement rectangulaire dans laquelle un passage de liquide de frein (A1-E1) pour un premier système et un passage de liquide de frein (A2-E2) pour un deuxième système sont formés, et une deuxième base (140) parallélépipédique sensiblement rectangulaire dans laquelle seul un passage de liquide de frein (A1-E1) pour le premier système mais pas de passage de liquide de frein pour le deuxième système est formé, dans lequel
la première base (40) est un bloc parallélépipédique sensiblement rectangulaire ayant des dimensions a1, b1 et c1 dans trois directions lesquelles sont orthogonales l'une à l'autre, la deuxième base (140) est un bloc parallélépipédique sensiblement rectangulaire ayant des dimensions a2, b2 et c2 dans trois directions lesquelles sont orthogonales l'une à l'autre,
dans la première base (40), dans une face, des trous de montage de composant d'assemblage dans lesquels des composants d'assemblage doivent être montés sont formés,
dans la première base (40), d'un côté d'une ligne de référence (50) passant par un centre de l'une face, le passage de liquide de frein (A1-E1) et un trou de montage de composant d'assemblage (48) pour le premier système sont formés, et de l'autre côté de la ligne de référence (50), le passage de liquide de frein (A2-E2) et un trou de montage de composant d'assemblage (49) pour le deuxième système sont formés, et
dans la deuxième base (140), le passage de liquide de frein (A1-E1) et un trou de montage de composant d'assemblage (148) pour le premier système ayant la même configuration que ceux de la première base (40) sont formés,
**caractérisé en ce que**
les dimensions de la première base (40) et de la deuxième base (140) dans les directions respectives sont identiques de sorte que les relations a1 = a2, b1 = b2 et c1 = c2 sont satisfaites.

2. Ensemble (170) de base selon la revendication 1, dans lequel
dans la première base (40), un trou de montage de moteur (63) dans lequel un moteur (29) doit être monté est formé de sorte qu'un centre est positionné sur la ligne de référence (50), et
dans la deuxième base (140), d'un côté d'une ligne de référence (150) passant par un centre d'une face de la deuxième base (140), le passage de liquide de frein (A1-E1) et le trou de montage de composant d'assemblage (148) pour le premier système sont formés, et de l'autre côté de la ligne de référence (150), un trou de montage de moteur (163) dans lequel un moteur (129) doit être monté est formé.

3. Ensemble (170) de base selon l'une quelconque des revendications 1 et 2, dans lequel dans chacune de la première base (40) et de la deuxième base (140), dans l'une face, une paire de trous de montage de composant d'assemblage (48 ; 148) pour le premier système sont formés, et une distance entre des centres de la paire de trous de montage de composant d'assemblage (48 ; 148) est commune.

4. Ensemble (170) de base selon l'une quelconque des revendications 1 à 3, dans lequel dans la première base (40), le passage de liquide de frein (A1-E1) et le trou de montage de composant d'assemblage (48) pour le premier système, et le passage de liquide de frein (A2-E2) et le trou de montage de composant d'assemblage (49) pour le deuxième système sont formés de façon à être symétriques par rapport à la ligne de référence (50).

5. Ensemble (170) de base selon l'une quelconque des revendications 1 à 4, dans lequel le composant d'assemblage est une électrovanne, une pompe ou un réservoir.

6. Ensemble (170) de base selon la revendication 4 ou 5, dans lequel le premier système et le deuxième système incluent les composants d'assemblage communs.

7. Ensemble (170) de base selon la revendication 2, dans lequel dans la deuxième base (140), le trou de montage de moteur (163) et un trou de montage (148) d'électrovanne dans lequel une électrovanne doit être montée sont formés dans la même face.

8. Procédé de fabrication d'un ensemble (170) de deux bases pour dispositifs de commande de pression de liquide de frein (10,110) pour véhicules, lequel ensemble (170) inclut une première base (40) parallélépipédique sensiblement rectangulaire dans laquelle un passage de liquide de frein (A1-E1) pour un premier système et un passage de liquide de frein (A2-E2) pour un deuxième système sont formés, et une deuxième base (140) parallélépipédique sensiblement rectangulaire dans laquelle seul un passage de liquide de frein (A1-E1) pour le premier système est formé, le procédé étant **caractérisé en ce qu'**il comprend :
la fourniture de la première base (40) en tant que bloc parallélépipédique sensiblement rectangulaire ayant des dimensions a1, b1 et c1 dans trois directions lesquelles sont orthogonales l'une à l'autre, et la fourniture de la deuxième base (140) en tant que bloc parallélépipédique sensiblement rectangulaire ayant des dimensions a2, b2 et c2 dans trois directions lesquelles sont orthogonales l'une à l'autre, et les dimensions de la première base (40) et de la deuxième base (140) dans les directions respectives sont identiques de sorte que les relations a1 = a2, b1 = b2 et c1 = c2 sont satisfaites,
dans chacune de la première base (40) et de la deuxième base (140), d'un côté d'une ligne de référence (50 ; 150) passant par une position centrale, la formation du passage de liquide de frein (A1-E1) et d'un trou de montage de composant d'assemblage (48 ; 148) pour le premier système ;
dans la première base (40), de l'autre côté de la ligne de référence (50), la formation du passage de liquide de frein (A2-E2) et d'un trou de montage de composant d'assemblage (49) pour le deuxième système, et la formation d'un trou de montage de moteur (63) de sorte qu'un centre est positionné sur la ligne de référence (50) ; et
dans la deuxième base (140), de l'autre côté de la ligne de référence (150), la formation d'un trou de montage de moteur (163).

9. Procédé selon la revendication 8, dans lequel dans la deuxième base (140), le trou de montage de moteur (163) et un trou de montage (148) dans lequel une électrovanne doit être montée sont formés dans la même face.
